# EUROPÄISCHE PATENTSCHRIFT

(11) **EP 3 253 993 B1**
(45) Veröffentlichungstag und Bekanntmachung des Hinweises auf die Patenterteilung: **10.04.2019**
(21) Anmeldenummer: 16702532.9
(22) Anmeldetag: 01.02.2016
(51) Int. Cl.: F16G 13/16, H02G 11/00

(54) **KETTENGLIED UND KREISKETTE MIT KETTENGLIED**
CHAIN LINK AND CIRCULAR CHAIN HAVING A CHAIN LINK
MAILLON DE CHAÎNE ET CHAÎNE CIRCULAIRE MUNIE DE MAILLONS

(30) Priorität: 02.02.2015 DE 202015100472 U
(43) Veröffentlichungstag der Anmeldung: 13.12.2017
(73) Patentinhaber: Igus GmbH, 51147 Köln (DE)
(72) Erfinder: THEISS, Georg, 50678 Köln (DE)
(74) Vertreter: Lippert Stachow Patentanwälte Rechtsanwälte
(86) Internationale Anmeldenummer: PCT/EP2016/052063
(87) Internationale Veröffentlichungsnummer: WO 2016/124540

(56) Entgegenhaltungen:
- EP-A2- 0 521 506
- DE-T2-602005 001 753
- DE-U1-202010 001 084
- US-B1- 7 367 447

## Beschreibung

Die Erfindung betrifft ein Kettenglied mit einem kreisektorförmigen Körper für eine Kreiskette zur Aufnahme und Führung von Energieleitungen zwischen zwei relativ zueinander beweglichen Anschlusspunkten in einer Kreisbewegung um eine Drehachse, wobei die Kreiskette einen kreisbogenförmigen Körper mit einer Kreismittelpunktsachse aufweist, der sich aus einer Vielzahl von in umfänglicher Richtung aneinander angrenzenden kreissektorförmigen Kettengliedern zusammensetzt, wobei die Kettenglieder in ihren angrenzenden Verbindungsbereichen jeweils um eine erste zur Kreismittelpunktsachse radiale Schwenkachse verschwenkbar miteinander verbunden sind. Erfindung betrifft ferner eine Kreiskette mit derartigen Kettengliedern.

Derartige Kreisketten weisen in der Regel zwei über einen Umlenkbogen verbundene Trume auf. Sie werden beispielsweise bei Industrierobotern eingesetzt, wenn Leitungen über große Drehwinkel und in hoher Drehwinkelgeschwindigkeit übertragen werden müssen. Dies erfordert eine entsprechend gute und leichte Beweglichkeit des Körpers bzw. der den Körper aufbauenden Kettenglieder.

Eine gattungsgemäße Kreiskette mit gattungsgemäßen Kettengliedern wird in der DE 20 2010 001 084 U1 beschrieben, wobei die Kettenglieder über eine radiale erste Schwenkachse verschwenkbar miteinander verbunden sind. Hierdurch wird bereits eine gute Beweglichkeit erzielt.

Eine Aufgabe der Erfindung ist, ein gattungsgemäßes Kettenglied bzw. eine gattungsgemäße Kreiskette mit einem Körper aus schwenkbeweglich miteinander verbundenen Kettengliedern bereitzustellen, das bzw. die eine verbesserte Schwenkbeweglichkeit zu dem Gelenkpartner aufweisen.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass das Kettenglied zur Ausbildung einer als Scharniergelenkverbindung ausgebildeten Gelenkverbindung mit dem jeweiligen Gelenkpartner ausgelegt ist und zumindest einen als erster Verbindungsbereich ausgebildeten Verbindungsbereich aufweist, der so ausgebildet ist, dass die Scharniergelenkverbindung zusätzlich zu der Verschwenkung um die erste Schwenkachse mindestens eine weitere Relativbewegung der Gelenkpartner ermöglicht.

In dem ersten Verbindungsbereich sind somit Maßnahmen vorgesehen, die eine weitere Relativbewegung der Gelenkpartner und somit eine verbesserte Beweglichkeit derselben relativ zueinander ermöglichen. Das Kettenglied kann in einer Scharnierverbindung mit mindestens zwei Freiheitsgraden an den Gelenkpartnern verschwenkt werden.

Vorzugsweise ist der erste Verbindungsbereich des Kettengliedes für eine erste zusätzliche Relativbewegung der Gelenkpartner in Form einer Verschwenkung der Gelenkpartner um eine zweite Schwenkachse ausgelegt, die sich in Längsrichtung der Kreiskette erstreckt. Die zweite Schwenkachse kann in bezüglich der Kreismittelpunktsachse umfänglicher oder etwa umfänglicher Richtung, also zumindest im Wesentlichen umfänglicher Richtung, der aneinander angrenzenden kreissektorförmigen Kettengliedern erstrecken.

Alternativ oder zusätzlich kann der erste Verbindungsbereich des Kettengliedes für eine zweite zusätzliche Relativbewegung der Gelenkpartner in Form einer Translation der Gelenkpartner ausgelegt sein. Die Translation kann insbesondere senkrecht zur Längsrichtung und Querrichtung des Kettengliedes bzw. der Kreiskette erfolgen. Somit kann die Translation senkrecht zu einer Kettengliedebene erfolgen. Hinsichtlich der vorgesehenen Schwenkachsen kann diese Translation senkrecht oder etwa senkrecht zu den Schwenkachsen, also zumindest im Wesentlichen senkrecht zu den beiden Schwenkachsen erfolgen. Bis auf den Bereich mit dem Umlenkbogen kann die Translation somit in Richtung der Kreismittelpunktsachse erfolgen. Unter einer Translation des einen Gelenkpartners relativ zu dem anderen Gelenkpartner wird eine Verschiebung des einen Gelenkpartners relativ zu dem anderen Gelenkpartner verstanden, bei der alle Punkte des einen Gelenkpartners, also der Gelenkpartner als Ganzes, relativ zu dem anderen Gelenkpartner um einen gleichen Betrag verschoben werden.

Es kann die Scharnierverbindung bis zu drei Freiheitsgrade aufweisen: Verschenkung um die erste Schwenkachse, Verschwenkung um die zweite Schwenkachse und Translation senkrecht zu den Schwenkachsen.

Es kann mittels der Scharnierverbindung eine ausgeprägte Führung der Gelenkpartner bei deren Verschwenkung um die erste Schwenkachse und mit dem zusätzlichen Freiheitsgrad eine erhöhte Beweglichkeit der Gelenkpartner relativ zueinander erzielt werden. Es können, wie weiter unten ausgeführt, im Vergleich zur gattungsgemäßen Kreiskette engere Radien beim Umlenken der Kreiskette über einen Umlenkbogen erzielt, Höhen überwunden werden. Ferner können insbesondere durch die Verschwenkung um die zweite Schwenkachse die Kreiskette verspannende Torsionskräfte vermieden werden.

Der Körper der Kreiskette mit den erfindungsgemäßen Kettengliedern kann beispielsweise als Grundform ein flaches kreisringförmiges Band aus gelenkig miteinander verbunden Kettengliedern mit einer oder mehreren in einer Bereitstellungslage um eine Mittelachse schraubenartig gewundenen Lagen aufweisen. Der Körper kann somit als Stütze, als "Wirbelsäule" für die Kreiskette dienen. Das Band kann umfängliche Schmalseiten und diese verbindende gegenüberliegende größere Seiten, das heißt eine erste Seite und eine zweite Seite, aufweisen. Es kann die erste Seite zumindest über einen radialen Teilbereich als zumindest im Wesentlichen durchgehende Gleitfläche ausgebildet sein und/oder an der zweiten Seite der Führungsraum angeordnet ist.

Weist der Körper in Einsatzlage ferner ein in Drehrichtung gewundenes erstes Trum, ein gegensinnig zu dem ersten Trum gewundenes zweites Trum und einen die beiden Trume verbindenden Umlenkbogen auf, so ist insbesondere im Bereich des Umlenkbogens und den dort angrenzenden Bereichen der Trume eine erhöhte relative Beweglichkeit der Kettengliede gefordert, damit sich die Gelenkpartner im Ablauf dieser komplexen Bewegung nicht gegenseitig behindern. Eine Vergrößerung der Baugröße des Bandes, insbesondere eines inneren Durchmessers des Bandes kann im bestimmten Umfange Abhilfe schaffen, ändert aber nicht das Grundproblem. Dank der zu der Verschwenkung mindestens einen zusätzlichen Bewegung der Gelenkpartner relative zueinander können sich dieselben leichter der Bewegung anpassen, auch um beispielsweise ungünstige Toleranzen auszugleichen. Ferner wird eine engere Kreisbewegung des Bandes möglich. Somit ist auch eine Verringerung der Baugröße möglich.

Insbesondere im Bereich des Umlenkbogens können bezüglich der Längsachse Torsionskräfte auftreten, wobei die Längsachse der Kreiskette in Bereitstellunglange bezüglich der Drehachse in umfänglicher Richtung des Bandes verläuft. Diese Torsionskräfte können das Band ungünstig verspannen und damit das Verfahren des Körpers behindern. Ferner ist mit einem erhöhten Verschleiß zu rechnen. Dank des zusätzlichen zweiten Freiheitsgrades können die Gelenkpartner durch ihre relative Verschwenkung um die zweite Schwenkachse diese Verspannung zumindest mildern.

Mit der vorgesehenen relative Translation der Gelenkpartner als dritten Freiheitsgrad der Scharniergelenkverbindung können beispielsweise vorgesehene Steigungen in Richtung der Drehachse mit steileren Steigungswinkel überwunden werden, die ohne Translation ebenfalls schädliche Verspannungen in dem Körper hervorrufen würden, oder eine entsprechende Erweiterung der Baugröße, d.h. eine Abmilderung der Steigung erfordern würden. Dies kann bei der oben beschriebenen Kreiskette vorteilhaft sein, bei der sich die Trume an den an dem Umlenkbogen anschließenden Bereichen gleitend aneinander abstützen, wobei in diesen Bereichen konstruktionsbedingt größere Steigungen in Richtung der Drehachse auftreten.

Die Realisierung der Translation kann konstruktiv einfach dadurch bereitgestellt werden, dass der erste Verbindungsbereich eine Kulissenführung zur Führung des zugeordneten Gelenkpartners aufweist. Somit kann der Gelenkpartner an oder in der Kulissenführung geführt angeordnet sein. Vorzugsweise ist die Kulissenführung für eine rein lineare Translation der Gelenkpartner relativ zueinander ausgelegt.

Konstruktiv unaufwändig kann der erste Verbindungsbereich des Kettengliedes als erstes Verbindungsmittel mindestens eine zur ersten Schwenkachse axiale erste Scharnieröffnung mit einem ungebogenen, also linearen Langlochprofil als Kulissenführung aufweisen. Damit kann eine translatorische Relativbewegung der Gelenkpartner in dem Langloch erfolgen. Die Translation erfolgt in Längserstreckung des Langlochprofils. Die Erstreckung des Langlochprofiles bestimmt die Richtung der Translation. Da es ungebogen ist, ist die Translation rein linear. Vorzugsweise streckt sich das Langlochprofil in oder zumindest im Wesentlichen in Richtung der Kreismittelpunktsachse. Das Langlochprofil kann sich bezüglich der Kreismittelpunktachse des Kettengliedes senkrecht zur ersten Schwenkachse axial längserstrecken. Die Kreismittelpunktachse kann sich senkrecht zu einer Kettengliedebene erstrecken.

Der Gelenkpartner kann so in das Langloch eingreifen, dass zusätzlich oder anstatt der Translation ein Verkippen des Gelenkpartners in dem Langloch möglich wird. Das Verkippen kann als Verschwenkung um die zweite Schwenkachse ausgeführt werden. Diese ist, da sie durch die Kippbewegung in dem Langloch erfolgt, senkrecht zur ersten Schwenkachse. In beiden Fällen, dem Verschwenken um die zweite Schwenkachse und der Translation in dem Langloch, kann der jeweilige Gelenkpartner in Begrenzung seiner Relativbewegung endseitig in dem Langlochprofil anschlagen.

Der kreisbogenförmigen Körper der Kreiskette kann kreisringartig ausgebildet sein. Entsprechend ist der Körper des Kettengliedes kreissektorförmig, insbesondere kreisringsektorförmig ausgebildet sein. Das Kettenglied kann einen plattenartigen Körper mit einer zur Kreismittelpunktachse axialen Dicke und mit den beiden größeren Seitenflächen ausgebildet sein, wobei diese in Einbaulage in die Kreiskette einen Abschnitt der ersten Seite und der zweiten Seite der Kreiskette bilden. Die erste Scharnieröffnung kann mittig zur Dicke angeordnet sein. Die Längserstreckung des Langlochprofils kann bis 95% der Dicke, insbesondere bis 90% der Dicke oder etwa 85% der Dicke betragen. Je größer der Anteil der Längserstreckung an der Dicke ist, desto größer ist die mögliche Beweglichkeit der Gelenkpartner zueinander.

Der Körper des Kettengliedes kann einstückig insbesondere als Kunststoff-Spritzgussteil hergestellt sein.

In einer Weiterbildung des Kettengliedes kann dasselbe einen vom ersten Verbindungsbereich zur Kreismittelpunktsachse umfänglich beabstandeten zweiten Verbindungsbereich zur Ausbildung der Scharniergelenkverbindung mit einem weiteren Gelenkpartner und zwar an dessen ersten Verbindungsbereich mit der mindestens eine ersten Scharnieröffnung aufweisen. Der zweite Verbindungsbereich kann als zweites Verbindungsmittel zumindest eine zur ersten Schwenkachse axiale zweite Scharnieröffnung aufweisen. Diese kann ein zumindest im Wesentlichen kreisrundes Öffnungsprofil zur Aufnahme eines durch die Scharnieröffnungen beider Gelenkpartner geführten Scharnierbolzens aufweisen. Alternativ kann in dem zweiten Verbindungsbereich als zweites Verbindungsmittel zumindest einen zumindest im Wesentlichen kreisrunden Bolzen zum Eingriff in die erste Scharnieröffnung des zugeordneten Gelenkpartners vorgesehen sein. Dieser Bolzen kann einstückig an dem Kettenglied angeformt angeordnet sein. Damit ist bei dieser Ausbildungsform der Scharnierverbindung kein weiteres einzelnes Bauteil erforderlich. Die Verbindungsbereiche können jeweils endseitig bzw. in einem Endbereich des jeweiligen Kettengliedes angeordnet sein.

In einer Weiterbildung des Kettengliedes kann die mindestens eine erste Scharnieröffnung mit dem sich öffnenden C-Profil zu ihrer Stabilisierung gegen eine zur ersten Schwenkachse radiale Aufweitung eine Verstärkung aufweisen. Diese kann als eine zur ersten Schwenkachse senkrecht angeordnete Verstärkungswand ausgebildet sein, die seitlich mit dem C-Profil verbunden ist. Somit kann die Verstärkungswand zur ersten Schwenkachse radiale Kräfte von dem C-Profil aufnehmen. Die Verstärkungswand kann die erste Scharnieröffnung senkrecht zur ersten Schwenkachse vorteilhaft mittig teilen.

Der kreissektorförmige Körper des Kettengliedes kann wie die Kreiskette eine senkrecht zur Kreismittelpunktsachse angeordnete zweite Seite aufweisen. Diese kann als Trägerin des zu diesem Kettenglied zugehörigen Abschnitts des Führungsraums ausgebildet sein. Sie kann den Führungsraum begrenzen. Es können an der zweiten Seite von derselben bezüglich der Kreismittelpunktsachse axial wegstehenden Mitteln, insbesondere bügel- oder bogenförmige Haltemittel zur Aufnahme und Führung der Energieleitungen, vorgesehen sein. Vorzugsweise ist das C-Profil bezüglich der Kreismittelpunktsachse axial in Richtung der von der zweiten Seite wegweisenden Flächennormalen oder in Richtung der wegstehenden Mittel geöffnet ausgebildet. Insbesondere dann, wenn zumindest jedes dritte oder vierte Kettenglied der Kreiskette derartige Haltemittel aufweist, können diese die Verschwenkung der Kettenglieder um die erste Schwenkachse begrenzen, indem diese endseitig seitlich gegeneinander anschlagen. Hierdurch kann, wie weiter unten in der Figurenbeschreibung ausgeführt, insbesondere während der Lagerung und Montage der Kreiskette verhindert werden, dass ein über die Scharnierverbindung verbundenes Kettenglied aus das C-Profil herausgleitet.

Die Haltemittel können zusammen mit dem Körper ein einstückiges Bauteil bilden. Vorzugsweise sind die Haltemittel jedoch nachträglich an dem Körper festlegbar angeordnet. Hierbei können die Haltemittel je nach Anforderung wie in Ausbildung und/oder Dimensionierung baulich variieren. In der Kreiskette kann zwar, muss aber nicht zwingend, jedes der Kettenglieder die Haltemittel aufweisen. Vorzugsweise sind die mit Haltemitteln versehenen Kettenglieder über die Kreiskettenlänge gleich beabstandet angeordnet.

In einer Weiterbildung des Kettengliedes kann vorgesehen sein, dass, sich jeweils zur Kreismittelpunktsachse umfänglich oder tangential weg erstreckend, in dem ersten Verbindungsbereich zumindest ein erster Vorsprung mit dem ersten Verbindungsmittel und in dem zweiten Verbindungsbereich zumindest ein zweiter Vorsprung mit dem zweiten Verbindungsmittel angeordnet sind. Zur verbesserten mechanischen Stabilität der Scharnierverbindung und zur besseren Führung der beiden Verbindungspartner relativ zueinander können mehrere erste und zweite Vorsprünge vorgesehen sein. Hierbei kann die Anzahl der in dem ersten Verbindungsbereich vorgesehenen ersten Vorsprünge um eins kleiner als die in dem zweiten Verbindungsbereich vorgesehenen zweiten Vorsprünge sein. Dies hat zur Folge, dass in Einbaulage ein erster Vorsprung axial jeweils von zwei zweiten Vorsprüngen flankiert wird.

In Einbaulage können erste Scharnieröffnungen und zweite Scharnieröffnungen bzw. Bolzen bezüglich der Schwenkachse axial jeweils fluchtend zueinander angeordnet sein. Die Vorsprünge können zum leichteren Verschwenken der Kettenglieder der Kreiskette bevorzugt um die erste Schwenkachse jeweils endseitig gerundet ausgebildet sein. In einer Ausführungsform des Kettengliedes können in dem ersten Verbindungsbereich mindestens zwei als erste Vorsprünge ausgebildete Vorsprünge und in dem zweiten Verbindungsbereich mindestens drei als zweite Vorsprünge ausgebildete Vorsprünge vorgesehen sind. Die Vorsprünge können bezüglich der Kreismittelpunktsachse radial aneinander anschließend und in alternierender Reihenfolge angeordnet sind. Die Vorsprünge benachbarter Kettengliede können in Verbindungsposition zahnartig ineinander greifen, wobei die Scharnieröffnungen der Vorsprünge bezüglich der ersten Schwenkachse axial fluchtend angeordnet sind. Es können die Vorsprünge bezüglich der ersten Schwenkachse axial verschiebungsfest seitlich anliegen.

Für den Fall, dass das zweites Verbindungsmittel zumindest einen zumindest im Wesentlichen kreisrunden Bolzen zum Eingriff in die erste Scharnieröffnung des zugeordneten Gelenkpartners aufweist, kann sich der Bolzen in Richtung der zweiten Schwenkachse zwischen zwei zweiten Vorsprünge erstrecken. Für den Fall, dass das die erste Scharnieröffnung mit dem sich öffnenden C-Profil zu ihrer Stabilisierung gegen eine zur ersten Schwenkachse radiale Aufweitung eine zur ersten Schwenkachse senkrecht angeordnete Verstärkungswand aufweist, kann der Bolzen in dem Bereich der Verstärkungswand in zwei Bolzenabschnitte geteilt sein, die sich jeweils mit einem freien Ende bezüglich der ersten Schwenkachse unter Begrenzung eines Zwischenraums zum Eingriff der Verstärkungswand axial aufeinander zu erstrecken. Der Zwischenraum kann eine axiale Stärke gleich der Dicke der Verstärkungswand aufweisen.

Es kann eine Kreiskette gemäß einer der zuvor und nachfolgend beschriebenen Ausführungsformen zur Aufnahme und Führung von Energieleitungen zwischen zwei relativ zueinander beweglichen Anschlusspunkten in einer Kreisbewegung um eine Drehachse vorgesehen sein. Die Kreiskette kann einen Führungsraum für die Energieleitungen und einen die kreisbogenförmigen Körper aufweisen, der sich aus einer Vielzahl von in umfänglicher Richtung aneinander angrenzenden kreissektorförmigen Kettengliedern gemäß einer zuvor und nachfolgend beschriebenen Ausführungsformen zusammensetzt. Die Kettenglieder können in Verbindungsbereichen aneinander angrenzend jeweils in einer Scharniergelenkverbindung über eine radiale erste Schwenkachse verschwenkbar miteinander verbunden sein.

Die Scharniergelenkverbindung kann einen weiteren Freiheitsgrad in Form einer zusätzlichen Relativbewegung der Gelenkpartner aufweisen. Die zusätzliche Relativbewegung kann in Form einer Verschwenkung der Gelenkpartner um eine zweite Schwenkachse in bezüglich der Drehachse umfänglicher oder tangentialer Richtung und/oder in Form einer zur Drehachse zumindest im Wesentlichen axialen Translation senkrecht oder etwa senkrecht zu den Schwenkachsen erfolgen.

Wie oben erläutert, sind benachbarte Kettenglieder jeweils über einen ersten Verbindungsbereich des einen und einen zweiten Verbindungsbereich des anderen Gelenkpartners miteinander verbunden. In einer Weiterbildung der Kreiskette können die ersten Verbindungsmittel der Kettenglieder in Bereitstellungslage der Kreiskette zumindest eine zur Drehachse radiale erste Scharnieröffnung mit einem sich zumindest im Wesentlichen axial zur Drehachse erstreckenden Langlochprofil sowie die zweiten Verbindungsmittel zumindest eine zur Drehachse zumindest im Wesentlichen radiale zweite Scharnieröffnung mit kreisrundem Öffnungsprofil aufweisen. In der Scharnierverbindung sind die Scharnieröffnungen zur ersten Schwenkachse axial fluchtend angeordnet und mittels eines durch die Scharnieröffnungen geführt angeordneten Scharnierbolzens zueinander schwenkbeweglich gehalten.

Alternativ können die ersten Verbindungsmittel in Bereitstellungslage der Kreiskette zumindest eine zur Drehachse radiale erste Scharnieröffnung mit einem sich zumindest im Wesentlichen axial zur Drehachse erstreckenden Langlochprofil aufweisen, das als ein in axialer Richtung geöffnetes C-Profil ausgebildet ist. Die zweiten Verbindungsmittel können zumindest einen zur Drehachse zumindest im Wesentlichen radial angeordneter Bolzen aufweisen, der in Verbindungsposition die erste Scharnieröffnung durchgreift.

Zur Verbindung zweier Gelenkpartner können die ersten und zweiten Verbindungsmittel der zugeordneten Verbindungsbereiche zweier Gelenkpartner in einer Fügeposition, in der die Gelenkpartner in einem Winkel um 90° angestellt sind, unter seitlichem Eingriff des Bolzens in das C-Profil der ersten Scharnieröffnung übereinander gebracht und in Eingriff gebracht werden. Anschließend können die beiden Gelenkpartner an den Verbindungsmitteln aus der Fügeposition in eine Arbeitsposition hinein verschwenkt werden, in der die Gelenkpartner in einem Winkel um 180° angestellt sind. In der Fügeposition können die Gelenkpartner gegen eine Loslösung der Verbindung in der Arbeitsposition gesichert sein.

Ohne die vorliegende Erfindung darauf zu begrenzen, wird sie im Folgenden anhand mehrerer in einer Zeichnung dargestellten Ausführungsformen des Kettengliedes beziehungsweise der Kreiskette mit Kettengliedern näher erläutert. In der Zeichnung zeigen:
Fig.1a bis 1d jeweils eine Ansicht einer ersten Ausführungsform einer Kreiskette aus einer Reihe von Kettengliedern gemäß einer ersten Ausführungsform unter Fortlassung von möglichen Anschlüssen und Anschlussgliedern,
Fig. 2 eine perspektivische Aufsicht auf einen Kreiskettenabschnitt mit mehreren flach aufliegenden Kettengliedern gemäß Figur 1,
Fig.3a bis 3d jeweils eine Ansicht eines Kettengliedes der Kreiskette gemäß Figur 1, jedoch ohne vorgesehene Haltemittel,
Fig. 4 eine perspektivische Aufsicht auf zwei zur Montage bereitgestellte Kettenglieder gemäß Figur 3,
Fig. 5a bis 5c jeweils eine perspektivische Ansicht dreier miteinander verbundenen Kettengliedern in verschiedenen Relativpositionen zueinander,
Figuren 6 bis 8 jeweils in perspektivischer Aufsicht und Schnitten das Zusammenfügen zweier Kettenglieder gemäß Figur 4 in drei Schritten,
Figuren 9a und 9b eine perspektivischer Aufsicht auf zwei zusammengefügte Kettenglieder bzw. eine Schnittansicht derselben bei Ihrer Relativstellung im Umlenkbogen der Kreiskette,
Figuren 10a bis 10c jeweils eine Ansicht einer zweiten Ausführungsform des Kettengliedes,
Fig. 11 eine perspektivische Ansicht auf einen Scharnierstift,
Figur 12a und 12b jeweils eine perspektivische Ansicht auf drei zusammengefügte Kettenglieder gemäß Figur 10 und
Figuren 13a bis 13d jeweils eine perspektivische Ansicht dreier zusammengefügter Kettenglieder in einer bestimmten Relativstellung zueinander.

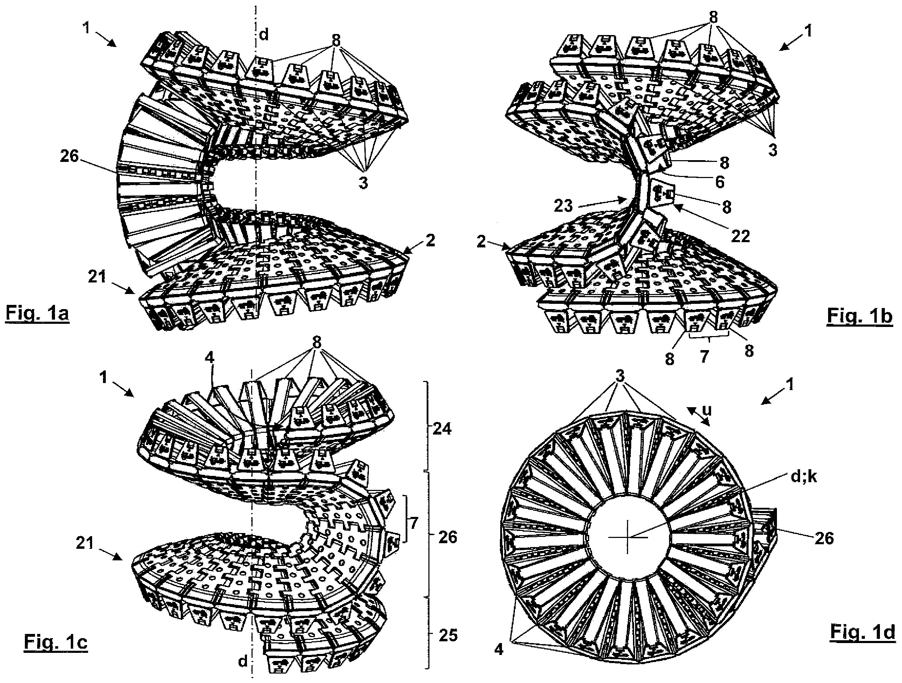

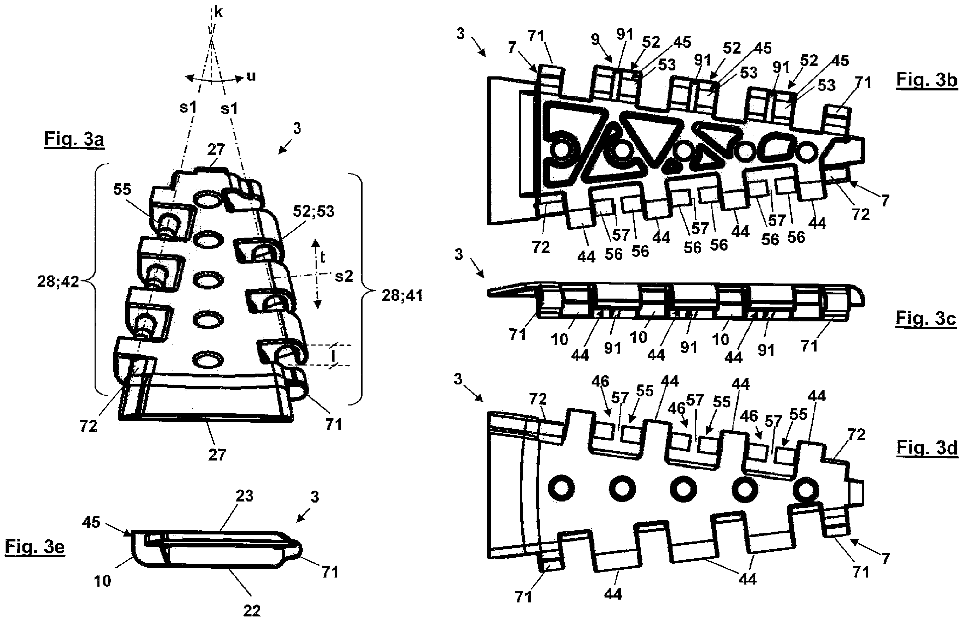

In den Figuren 1a bis 1d wird eine Kreiskette 1 zur Aufnahme und Führung von hier nicht dargestellten Energieleitungen zwischen zwei hier nicht dargestellten relativ zueinander beweglichen Anschlusspunkten in einer Kreisbewegung um eine Drehachse d gezeigt. Die Kreiskette 1 weist einen kreisbogenförmigen Körper 2 mit einer Kreismittelpunktsachse k (Figur 1d, Figur 3a) auf, der sich aus einer Vielzahl von in umfänglicher Richtung u aneinander angrenzende kreissektorförmigen Kettengliedern 3 zusammensetzt. Die Kettenglieder 3 sind in ihren angrenzenden Verbindungsbereichen 41, 42 über eine als Scharniergelenkverbindung 5 ausgebildeten Schwenkverbindung um eine erste zur Kreismittelpunktsachse k radiale Schwenkachse s1 verschwenkbar miteinander verbunden. Wie beispielsweise Figur 3a, einer perspektivischen Draufsicht auf eine erste Ausführungsform eines Kettengliedes 3, entnehmbar, ist ein als erster Verbindungsbereich 41 ausgebildeter Verbindungsbereich so ausgelegt, dass die Scharniergelenkverbindung 5 zusätzlich zu der üblichen Verschwenkung um die erste Schwenkachse s1 hier zwei weitere Relativbewegungen der Gelenkpartner 51, d.h. der gelenkig miteinander verbundenen Kettenglieder 3, ermöglicht.

Die erste zusätzliche Relativbewegung der Gelenkpartner 51 erfolgt um eine Verschwenkung der Gelenkpartner 51 um eine zweite Schwenkachse s2 in bezüglich der Kreismittelpunktsachse k umfängliche Richtung u. Als zweite zusätzliche Relativbewegung der Gelenkpartner 51 ist hier eine Translation der Gelenkpartner 51 in Translationsrichtung t senkrecht oder etwa senkrecht zu den Schwenkachsen s1, s2 vorgesehen. Wie den Figuren entnehmbar, erfolgt die Translation senkrecht zur Längsrichtung l und Querrichtung q des Kettengliedes 3 bzw. der Kreiskette 1. Somit weist die Scharniergelenkverbindung 5 hier drei Freiheitsgrade, eine Verschwenkung um die erste Schwenkachse s1, eine Verschwenkung um die zweite Schwenkachse s2 und eine Translation in Translationsrichtung t auf. Die Gelenkpartner 51 der Gelenkscharnierverbindung 5 sind bezüglich der ersten Schwenkachse s1 axial verschiebungsfest zueinander angeordnet.

Der Körper 2 der Kreiskette 1 weist in einer hier nicht dargestellten Bereitstellungslage als Grundform ein flaches kreisförmiges Band 21 aus gelenkig miteinander verbundenen Kettengliedern 3 mit einer oder mehreren um eine Mittelachse schraubenartig gewundenen Lagen auf. Das Band 21 weist senkrecht zur Drehachse d zwei gegenüberliegende größere Seiten, d.h. eine erste Seite 22 und eine zweite Seite 23, auf, wobei die zweite Seite 23 Träger für einen Führungsraum 6 für die Energieleitungen ist. In der in Figur 1 gezeigten Einsatzlage der Kreiskette 1 ist der Körper 2 so über sich selbst zurückgeführt, dass er ein in Drehrichtung gewundenes erstes Trum, ein gegensinnig zu dem ersten Trum 24 gewundenes zweites Trum 25 und einen die beiden Trume 24, 25 verbindenden Umlenkbogen 26 aufweist, wobei die erste Seite 22 im Umlenkbogen 26 innenseitig angeordnet ist. Rein von der Anschauung her wird aus den Darstellungen in der Figur 1 ersichtlich, dass die Bewegung des Körpers 2 über den Umlenkbogen 26 sehr komplex mit einer kontinuierlichen Änderung der Anstellung der einzelnen Kettenglieder 3 verbunden ist. Dies führt leicht zu Torsions- und/oder Biegespannungen, wobei diesem durch die zusätzlichen Relativbewegungen der Kettenglieder zueinander begegnet werden kann.

Die Kettenglieder 3 weisen jeweils gleich dem Band 21 einen Körper 31 mit einer ersten Seite 22 und zweiten Seite 23 auf, wobei die beiden Seiten 22, 23 durch zur Kreismittelpunktachse k umfängliche Schmalseiten 27 und radiale Schmalseiten 28 miteinander verbunden sind. Hierbei sind die Verbindungsbereiche 4 der Kettenglieder 3 jeweils an den radialen Schmalseiten 28 angeordnet, an denen die Gelenkpartner 51 in der Scharniergelenkverbindung 5 verbunden sind. Die Kettenglieder weisen jeweils einen ersten Verbindungsbereich 41 und einen zweiten Verbindungsbereich 42 auf, wobei zur Ausbildung der Scharnierverbindung 5 der erste Verbindungsbereich 41 des einen Gelenkpartners 51 mit dem zweiten Verbindungsbereich 42 des anderen Gelenkpartners 51 verbunden wird.

In dem ersten Verbindungsbereich 41 sind sich zur Kreismittelpunktachse k tangential weg erstreckende erste Vorsprünge 43 mit ersten Verbindungsmitteln 45 und in dem zweiten Verbindungsbereich 42 sich tangential zur Kreismittelpunktachse k weg erstreckende zweite Vorsprünge 44 mit zweiten Verbindungsmitteln 46 vorgesehen. Die Vorsprünge 43, 44 der Gelenkpartner 51 greifen in alternierender Reihenfolge zahnartig ineinander. Es sind in den hier gezeigten Ausführungsformen der Kettenglieder 3 vier zweite Vorsprünge 44 und drei erste Vorsprünge 43 vorgesehen, wobei ein erste Vorsprung 43 jeweils von zwei zweiten Vorsprüngen 44 flankiert wird und bezüglich der ersten Schwenkachse s1 axial verschiebungsfest an denselben anliegt.

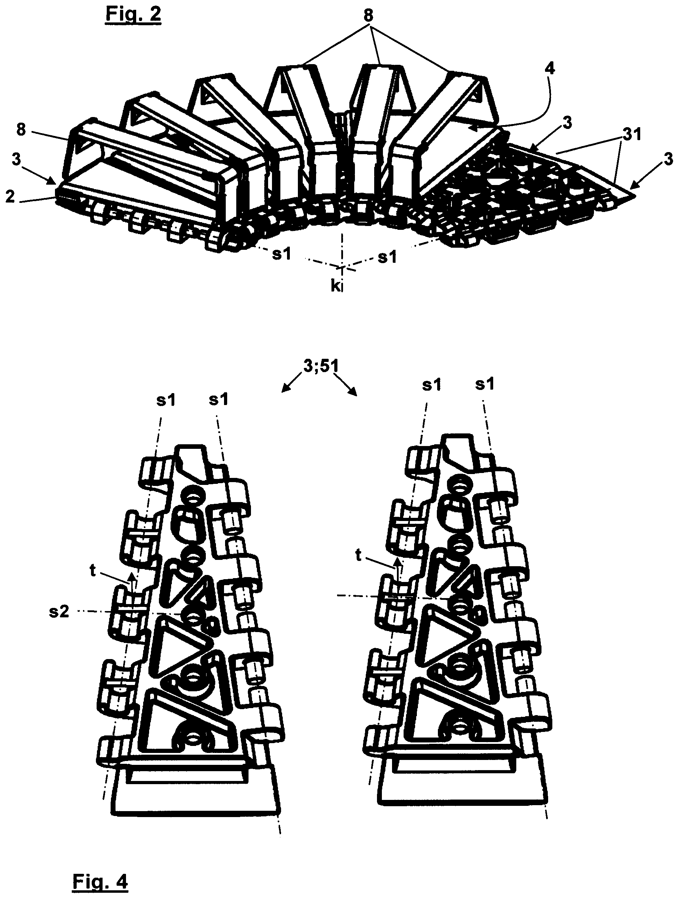

An den ersten Vorsprüngen 43 ist jeweils als erstes Verbindungsmittel 45 eine Kulissenführung 52 vorgesehen, die eine erste Scharnieröffnung 53 bildet, wobei sich die erste Scharnieröffnung 53 axial in Richtung der ihr zugeordneten ersten Schwenkachse s1 erstreckt. Die Kulissenführung 52 weist ein Langlochprofil auf, das sich um eine Länge l in Richtung der Kreismittelpunktachse k erstreckt. Dieses Langlochprofil ist in der ersten Ausführungsform des Kettengliedes 3 gemäß den Figuren 4 bis 9 in Richtung der Flächennormalen der zweiten Seite 23 unter Ausbildung eines C-Profils geöffnet ausgebildet, wobei die Schenkel des C-Profils parallel und in Richtung der Kreismittelpunktachse k verlaufen. Seitlich zwischen den zweiten Vorsprüngen 44 sind als zweite Verbindungsmittel 46 Bolzen 55 vorgesehen, die zur Ausbildung der Scharniergelenkverbindung 5 in die erste Scharnieröffnung 53 des Gelenkpartners 51 eingreifen. Der Bolzen 51 ist in einer Neutralposition, in der die Seiten 22, 23 der Gelenkpartner 51 zueinander fluchten, in halber Höhe der Länge l des Langlochprofils in der ersten Scharnieröffnung 53 angeordnet.

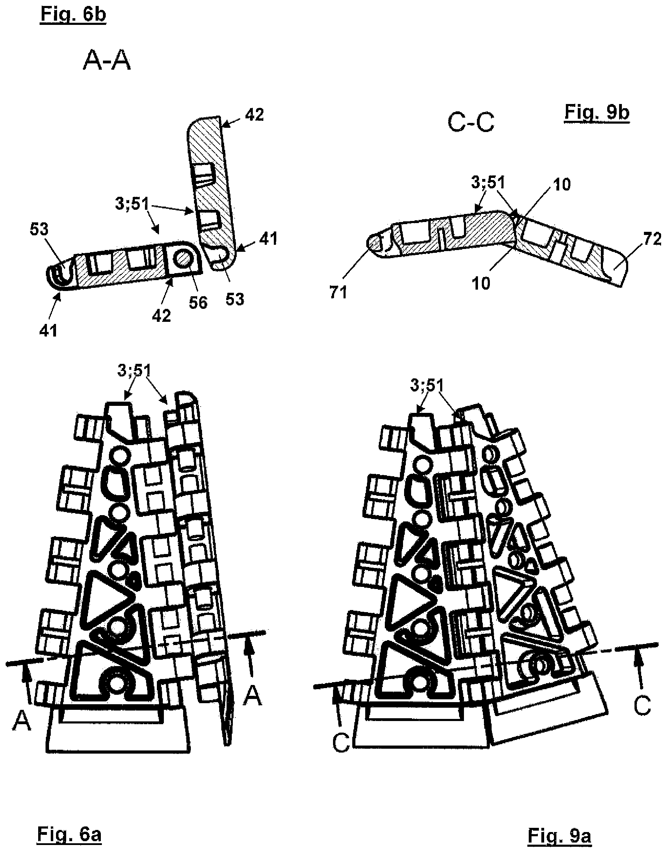

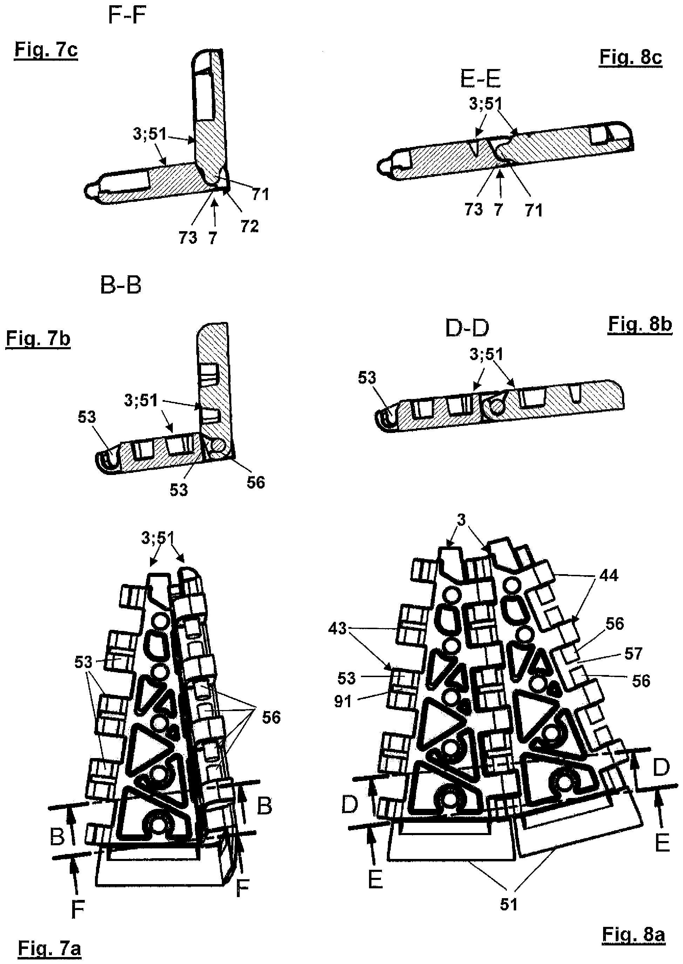

Die entsprechende Montage zur Verbindung zweier Gelenkpartner 51 ist in den Figuren 6a und 6b bis 8a und 8b in drei Schritten dargestellt. Da die erste Scharnieröffnung 53 in Richtung der Kreismittelpunktachse k geöffnet ist, werden die Gelenkpartner 51 in einer Fügeposition (Figur 6), in der die Gelenkpartner 51 in einem Winkel von um 90° angestellt sind, unter seitlichem Eingriff des Bolzens 55 in das C-Profil der ersten Scharnieröffnung 53 übereinander geschoben und in Eingriff gebracht (Figur 7). Zum leichteren Eingriff des Bolzens 55 in die erste Scharnieröffnung 53 zum Öffnungsrand hin trichterartig erweitert ausgebildet. Anschließend werden die Gelenkpartner 51 aus der Fügeposition in eine Arbeitsposition hinein verschwenkt, in der die Gelenkpartner in einen Winkel deutlich größer als 90°, hier gemäß Figur 8 in einen Winkel um 180° angestellt sind. Um zu verhindern, dass sich die Gelenkpartner 51 in der Arbeitsposition wieder voneinander lösen, ist eine Blockiervorrichtung 7 vorgesehen, die hier in zweifacher Ausführungsform zum Einsatz kommt. In ihrer ersten Ausführungsform weist die Blockiervorrichtung 7 in dem ersten Verbindungsbereich 41 einen Blockiervorsprung 71 auf, der in eine in dem zweiten Verbindungsbereich 42 vorgesehene Blockieröffnung 72 eingreift. Die Blockieröffnung 72 ist zu der zweiten Seite 23 hin seitlich geöffnet ausgebildet, so dass der Blockvorsprung 71 mit der Montage der Gelenkpartner 51 ungehindert in die Blockeröffnung 72 hineingleiten kann (Figur 6c). Die Blockeröffnung 72 weist jedoch in Richtung von der zweiten Seite 23 zu der ersten Seite 22 hin eine seitliche Wandung 73 auf, die einer Bewegung des Kettengliedes 3 mit dem Blockvorsprung 71 in dieser Richtung entgegensteht und somit als Anschlag gegen ein axiales Verschieben des Gelenkpartners 51 mit der ersten Scharnieröffnung 53 in Richtung der Flächennormalen der ersten Seite 22 dient. Damit können die beiden Gelenkpartner 51 in der Arbeitsposition zwar über eine bestimmte Höhe, hier über die Länge l des C-Profils, aber nicht darüber hinaus hin und her bewegt werden. Somit können die Gelenkpartner 51 in Translationsrichtung t relativ zueinander verschoben werden. Diese Ausbildungsform der Blockiervorrichtung 7 mit Blockiervorsprung 71 und Blockieröffnung 72 ist hier zweifach und zwar bezüglich der Kreismittelpunktachse k radial innen und radial außen vorgesehen.

Wie insbesondere den Figuren 1 und 2 entnehmbar, ist an der zweiten Seite hier eines jeden Kettengliedes 3 in Kreismittelpunktrichtung axial bügelförmige Haltemittel 8 vorgesehen, die nach Montage der Gelenkpartner 51 auf dieselben hier in Form einer Steckverbindung festgelegt werden können. Werden die in der Scharniergelenkverbindung 5 verbundenen Gelenkpartner 51 aus der Arbeitsposition um die erste Schwenkachse s1 zurück in Richtung der Fügeposition verschwenkt, so werden die an der zweiten Seite 23 angeordneten Haltemittel 8 zueinander verschwenkt und können mit Erreichen eines bestimmten Verschwenkwinkels seitlich aneinander anstoßen. Dies ist ansatzweise in Figur 1 gezeigt, indem Haltemittel 8 benachbarter Kettenglieder 3 mit dem Verlassen des Umlenkbogens 26 zueinander verschwenkt werden. Somit kann über die Dimensionierung der Haltemittel 8 und darüber, ob jedes Kettenglied 3 oder jedes x-te Kettenglied 3, wie zweite oder dritte Kettenglied 3 mit den Haltemitteln 8 versehen ist, ein bestimmter Verschwenkwinkel eingestellt werden, indem die Haltemittel 8 seitlich gegeneinander anschlagen und somit ein weiter gehende Verschwenkung blockieren. Dank dieser Maßnahme kann eine derart aufgebaute Kreiskette 1 vollständig vormontiert gelagert werden, ohne dass die Gefahr besteht, dass sich die Kettenglieder wieder unbeabsichtigt lösen.

Um einer möglichen bezüglich der ersten Schwenkachse s1 radialen Aufweitung des C-Profils unter der Belastung in der Kreiskette 1 entgegenzuwirken, ist eine Verstärkung 9 vorgesehen, die hier in Form einer zur ersten Schwenkachse s senkrecht angeordneten Verstärkungswand 91 ausgebildet ist. Die Verstärkungswand 91 verläuft hier über den gesamten Querschnitt des C-Profils und ist mit demselben verbunden. Damit wird die erste Scharnieröffnung 53 in hier zwei gleiche Abschnitte geteilt. Die Anordnung der Verstärkungswand 91 erfordert eine Teilung des Bolzens 55 in dem zweiten Verbindungsbereich 42 in zwei Bolzenabschnitte 56. Diese beiden Bolzenabschnitte 56 erstrecken sich jeweils mit einem freien Ende bezüglich der ersten Schwenkachse s1 unter Begrenzung eines Zwischenraumes 57 axial aufeinander zu, wobei die Verstärkungswand 91 mit Eingriff des Bolzens 55 in die erste Scharnieröffnung 53 in diesen Zwischenraum 57 eingreift. Der Zwischenraum 57 weist eine zur ersten Schwenkachse s1 axiale Stärke auf, die gleich der der Verstärkungswand 91 ist.

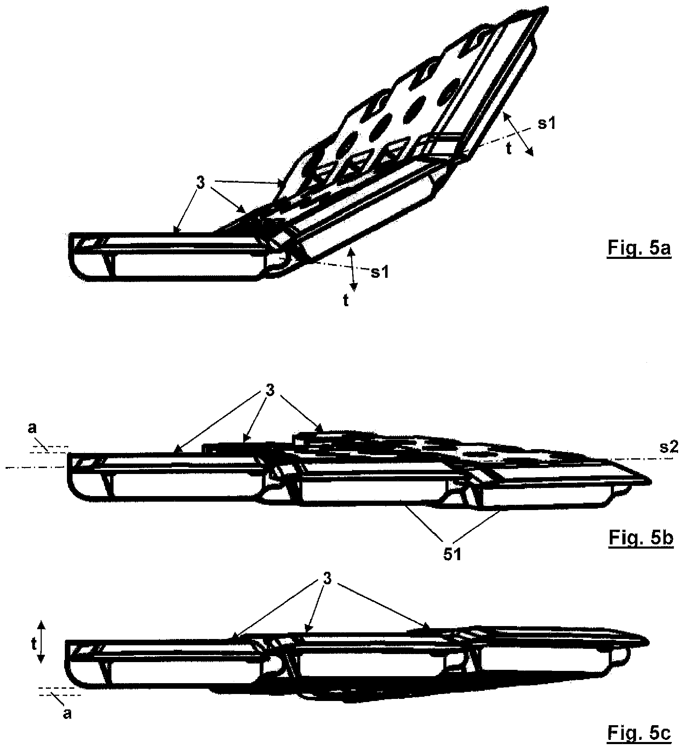

In den Figuren 5a bis 5c werden die möglichen relativen Hauptbewegungen der durch die Scharniergelenkverbindung 5 verbundenen Gelenkpartner 51 dargestellt. Gemäß Figur 5a sind die hier drei Kettenglieder 3 bezüglich der jeweils zugeordneten Scharniergelenkverbindung 5 um die erste Schwenkachse s1 verschwenkt und zusätzlich in Translationsrichtung t dem Langlochprofil der ersten Scharnieröffnung 53 um einen bestimmten Betrag a relativ zueinander verschoben. Diese zusätzliche translatorische Bewegung ermöglicht beispielsweise einen engeren Radius des Umlenkbogens 56 in der Kreiskette 1.

Gemäß Figur 5b sind die Gelenkpartner 51 in der jeweiligen Scharniergelenkverbindung 5 um die zweite Schwenkachse s2 verdreht zueinander angeordnet. Es kann leicht aus der Abbildung 5b gefolgert werden, dass diese sukzessive Verschwenkung um die zweite Schwenkachse s2 von Kettenglied 3 zu Kettenglied 3 weitergeführt werden kann, so dass bei einer entsprechenden Anzahl von gelenkig miteinander verbundenen Kettengliedern 3 bestimmte maximale Schwenkwinkel des ersten Kettengliedes zu dem letzten Kettenglied eingestellt werden können.

Figur 5c zeigt den Fall, dass die über die Scharniergelenkverbindung 5 verbundenen drei Kettenglieder 3 rein translatorisch in Richtung der Kreismittelpunktachse k um einen bestimmten Betrag a relativ zueinander verschoben sind, so dass die Kettenglieder 3 in eine stufenartige Anordnung gebracht sind. Beide zusätzlichen Relativbewegungen gemäß den Figuren 5b und 5c können insbesondere in dem Übergangsbereich der Trume 24, 25 in den Umlenkbogen 26 hinein in einer Mischform auftreten.

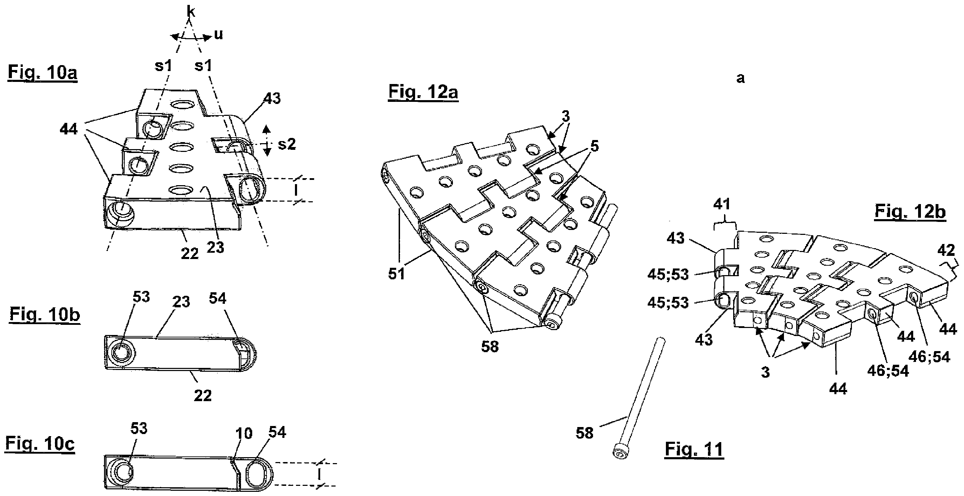

In den Figuren 10 bis 13 wird jeweils eine zweite Ausführungsform des Kettengliedes 3 dargestellt. Diese Ausführungsform ist gegenüber der zuvor erläuterten ersten Ausführungsform zwar baulich einfacher ausgestaltet, benötigt jedoch zur Ausbildung der Scharniergelenkverbindung 5 gemäß Figur 12a zusätzlich einen in Figur 11 dargestellten Scharnierbolzen 58.

Im Einzelnen sind die in dem ersten Verbindungsbereich 41 vorgesehenen ersten Scharnieröffnungen 53 als geradlinige Langlochöffnungen ohne seitliche Öffnung ausgeführt. In dem zweiten Verbindungsbereich 42 sind anstatt der Bolzen 55 gemäß der ersten Ausführungsform des Kettengliedes 3 als zweite Verbindungsmittel 46 zweite Scharnieröffnungen 54 mit kreisrundem Öffnungsquerschnitt vorgesehen, wobei die Scharnieröffnungen 53, 54 der die Scharnierverbindung 5 ausbildenden Gelenkpartner 51 in der Verbindungsposition zur ersten Schwenkachse s1 fluchtend zueinander angeordnet sind. Ähnlich wie bei der ersten Ausführungsform des Kettengliedes 3 gemäß den Figuren 1 bis 9, bestimmt die Länge l des Langlochprofils den Umfang der relativen Translation der Gelenkpartner 51 in Translationsrichtung t. Der Scharnierbolzen 58 ist, wie in der in den Figuren 10 dargestellten vorderen zweiten Scharnieröffnung 54 angedeutet, kopfseitig in diese zweite Scharnieröffnung 54 einschraubbar und, wie in Figur 12a dargestellt, bezüglich der ersten Schwenkachse s1 axial verschiebungsfest angeordnet.

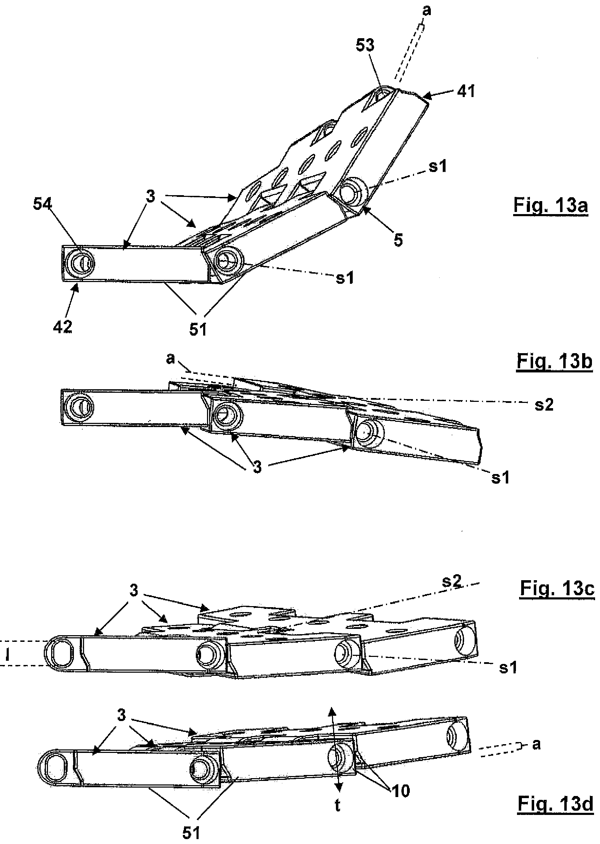

Ähnlich wie in den Figuren 5a bis 5c werden in den Figuren 13a bis 13d auch die grundlegenden relativen Bewegungsformen anhand dreier miteinander verbundener Kettenglieder 3 dargestellt. Gemäß Figur 13a sind alle drei Kettenglieder 3 um die erste Schwenkachse s1 verschwenkt und zusätzlich in Translationsrichtung t axial relativ zueinander verschoben. Zur Begrenzung der Verschwenkung um die erste Schwenkachse s1 sind in den beiden Verbindungsbereichen 41, 42 Anschläge 59 vorgesehen.

In Figur 13b wird die Verschwenkung der Kettenglieder 3 um die zweite Schwenkachse s2 senkrecht zur ersten Schwenkachse s1 wiedergegeben. Deutlich erkennbar ist der Figur 13b das Verkanten der Kettenglieder 3 um einen bestimmten Betrag a relativ zueinander entnehmbar. Figur 13c zeigt ebenfalls ein Verkanten der Kettenglieder 3 relativ zueinander, wobei die Verschwenkung um die zweite Schwenkachse s2 hier in zur Figur 13b umgekehrten Drehrichtung erfolgt.

In Figuren 13a, b, d sind die drei Kettenglieder 3 jeweils zu dem jeweiligen Gelenkpartner 51 um einen Betrag a relativ zueinander in Translationsrichtung t verschoben angeordnet.

Wie insbesondere den Figuren 9b und 13a ersichtlich, sind die Verbindungsbereiche 41, 42 endseitig mit zusammenwirkenden Anschlägen 10 zur Begrenzung des Radius des Umlenkbogens 26 der Kreiskette 1 versehen.

### Bezugszeichenliste

- 1: Kreiskette
- 2: Körper
- 21: Band
- 22: erste Seite
- 23: zweite Seite
- 24: erstes Trum
- 25: zweites Trum
- 26: Umlenkbogen
- 27: umfängliche Schmalseite
- 28: radiale Schmalseite
- 3: Kettenglied
- 31: Körper
- 4: Verbindungsbereich
- 41: erster Verbindungsbereich
- 42: zweiter Verbindungsbereich
- 43: erster Vorsprung
- 44: zweiter Vorsprung
- 45: erstes Verbindungsmittel
- 46: zweites Verbindungsmittel
- 5: Scharniergelenkverbindung
- 51: Gelenkpartner
- 52: Kulissenführung
- 53: erste Scharnieröffnung
- 54: zweite Scharnieröffnung
- 55: Bolzen
- 56: Bolzenabschnitte
- 57: Zwischenraum
- 58: Scharnierbolzen
- 59: Anschlag
- 6: Führungsraum
- 7: Blockiervorrichtung
- 71: Blockiervorsprung
- 72: Blockieröffnung
- 73: Wandung
- 8: Haltemittel
- 9: Verstärkung
- 91: Verstärkungswand
- 10: Anschlag
- a: Betrag
- d: Drehachse
- k: Kreismittelpunktsachse
- l: Länge
- s1: erste Schwenkachse
- s2: zweite Schwenkachse
- u: umfängliche Richtung
- t: Translationsrichtung

## Patentansprüche

1. Kettenglied mit einem kreissektorförmigen Körper (31) für eine Kreiskette (1) zur Aufnahme und Führung von Energieleitungen zwischen zwei relativ zueinander beweglichen Anschlusspunkten in einer Kreisbewegung um eine Drehachse (d), wobei die Kreiskette (1) einen kreisbogenförmigen Körper (2) mit einer Kreismittelpunktsachse (k) aufweist, der sich aus einer Vielzahl von in umfänglicher Richtung (u) aneinander angrenzenden kreissektorförmigen Kettengliedern (3) zusammensetzt, wobei die Kettenglieder (3) in ihren angrenzenden Verbindungsbereichen (41, 42) jeweils um eine erste zur Kreismittelpunktsachse (k) radiale Schwenkachse (s1) verschwenkbar miteinander verbunden sind, **dadurch gekennzeichnet, dass** das Kettenglied zur Ausbildung einer als Scharniergelenkverbindung (5) ausgebildeten Schwenkverbindung mit einem jeweiligen Gelenkpartner (51) ausgelegt ist und zumindest einen als erster Verbindungsbereich (41) ausgebildeten Verbindungsbereich aufweist, der so ausgebildet ist, dass die Scharniergelenkverbindung (5) zusätzlich zu der Verschwenkung um die erste Schwenkachse (s1) mindestens eine weitere Relativbewegung der Gelenkpartner (51) ermöglicht.

2. Kettenglied nach Anspruch 1, **dadurch gekennzeichnet, dass** es für eine erste zusätzliche Relativbewegung der Gelenkpartner (51) in Form einer Verschwenkung der Gelenkpartner (51) um eine zweite Schwenkachse (s2) in bezüglich der Kreismittelpunktsachse (k) umfänglicher Richtung (u) und/oder für eine zweite zusätzliche Relativbewegung der Gelenkpartner (51) in Form einer Translation der Gelenkpartner (51) senkrecht oder etwa senkrecht zur Längsrichtung (1) und Querrichtung (q) der Gelenkpartner (51) ausgelegt ist.

3. Kettenglied nach Anspruch 1 oder 2, **dadurch gekennzeichnet, dass** der erste Verbindungsbereich (41) eine Kulissenführung (52) zur Führung des zugeordneten Gelenkpartners (51) aufweist.

4. Kettenglied nach Anspruch 3, **dadurch gekennzeichnet, dass** der erste Verbindungsbereich (41) des Kettengliedes (3) als erstes Verbindungsmittel (45) eine zur ersten Schwenkachse (s1) axiale erste Scharnieröffnung (53) mit einem sich zumindest im Wesentlichen in Kreismittelpunktsachse (k) erstreckenden Langlochprofil als Kulissenführung (52) aufweist.

5. Kettenglied nach Anspruch 4, **dadurch gekennzeichnet, dass** es einen plattenartigen Körper (31) mit einer zur ersten Schwenkachse (s1) radialen Dicke aufweist, wobei die erste Scharnieröffnung (53) mittig zu der radialen Dicke angeordnet ist.

6. Kettenglied nach einem der Ansprüche 1 bis 5, **dadurch gekennzeichnet, dass** es einen vom ersten Verbindungsbereich (41) zur Kreismittelpunktsachse (k) umfänglich beabstandeten zweiten Verbindungsbereich (42) zur Ausbildung der Scharniergelenkverbindung (5) mit einem weiteren Gelenkpartner (51) und zwar an dessen ersten Verbindungsbereich (41) aufweist, wobei der zweite Verbindungsbereich (42) als zweites Verbindungsmittel (46) zumindest eine zur ersten Schwenkachse (s1) axiale zweite Scharnieröffnung (54) mit einem zumindest im Wesentlichen kreisrunden Öffnungsprofil zur Aufnahme eines durch die Scharnieröffnungen (53, 54) geführten Scharnierbolzens (58) oder der zweite Verbindungsbereich (42) als zweites Verbindungsmittel (46) zumindest einen zumindest im Wesentlichen kreisrunden Bolzen (55) zum Eingriff in die erste Scharnieröffnung (53) des zugeordneten Gelenkpartners (51) aufweist.

7. Kettenglied nach Anspruch 6, **dadurch gekennzeichnet, dass** das Langlochprofil der ersten Scharnieröffnung (53) ein sich bezüglich der ersten Schwenkachse (s1) radial öffnendes C-Profil zur bezüglich der Kreismittelpunktsachse (k) axialen Aufnahme des zumindest im Wesentlichen kreisrunden Bolzens (55) des zugeordneten Gelenkpartners (51) aufweist.

8. Kettenglied nach Anspruch 7, **dadurch gekennzeichnet, dass** der kreissektorförmige Körper (31) des Kettengliedes (3) eine senkrecht zur Kreismittelpunktsachse (k) angeordnete zweite Seite (23) mit von derselben axial wegstehenden Mitteln, insbesondere bügel- oder bogenförmige Haltemittel (8), zur Aufnahme und Führung der Energieleitungen, aufweist und dass das C-Profil in axialer Richtung der wegstehenden Mittel geöffnet ausgebildet ist.

9. Kettenglied nach einem der Ansprüche 6 bis 8, **dadurch gekennzeichnet, dass**, sich jeweils zur Kreismittelpunktsachse (k) umfänglich weg erstreckend, in dem ersten Verbindungsbereich (41) zumindest ein erster Vorsprung (43) mit dem ersten Verbindungsmittel (45) und in dem zweiten Verbindungsbereich (42) zumindest ein zweiter Vorsprung (44) mit dem zweiten Verbindungsmittel (46) angeordnet sind, wobei in dem ersten Verbindungsbereich (41) mindestens zwei als erste Vorsprünge (43) ausgebildete Vorsprünge und in dem zweiten Verbindungsbereich (42) mindestens drei als zweite Vorsprünge (44) ausgebildete Vorsprünge vorgesehen sind sowie wobei die Vorsprünge (43,44) bezüglich der Kreismittelpunktsachse (k) radial aneinander anschließend und in alternierender Reihenfolge angeordnet sind.

10. Kreiskette zur Aufnahme und Führung von Energieleitungen (E) zwischen zwei relativ zueinander beweglichen Anschlusspunkten (2) in einer Kreisbewegung um eine Drehachse (d), wobei die Kreiskette (1) einen Führungsraum (6) für die Energieleitungen und einen die kreisbogenförmigen Körper (2) aufweist, der sich aus einer Vielzahl von in umfänglicher Richtung (u) aneinander angrenzenden kreissektorförmigen Kettengliedern (3) gemäß einer der Ansprüche 1 bis 11 zusammensetzt und die Kettenglieder (3) in ihren angrenzenden Verbindungsbereichen (41, 43) jeweils in einer Scharniergelenkverbindung (5) über eine radiale erste Schwenkachse (s1) verschwenkbar miteinander verbunden sind und wobei die Scharniergelenkverbindung (5) zusätzlich zu der Verschwenkung um die erste Schwenkachse (s1) zumindest eine weitere Relativbewegung der Gelenkpartner (51) zueinander ermöglicht.

11. Kreiskette nach Anspruch 10, **dadurch gekennzeichnet, dass** die Gelenkpartner (51) in einer ersten zusätzlichen Relativbewegung in Form einer Verschwenkung der Gelenkpartner (51) um eine zweite Schwenkachse (s2) in bezüglich der Drehachse (d) umfängliche Richtung und/oder in einer zweiten zusätzlichen Relativbewegung in Form einer zumindest im Wesentlichen axialen Translation senkrecht oder etwa senkrecht zur Längsrichtung (1) und Querrichtung (q) der Gelenkpartner (51) zueinander bewegbar angeordnet sind.

12. Kreiskette nach Anspruch 10 oder 11, **dadurch gekennzeichnet, dass** die Kettenglieder (3) zur Ausbildung der Scharnierverbindungen (5) mit den benachbarten Kettengliedern (3) jeweils einen ersten Verbindungsbereich (41) mit ersten Verbindungsmitteln (45) und einen vom ersten Verbindungsbereich (41) zur Drehachse (d) umfänglich beabstandeten zweiten Verbindungsbereich (42) mit zweiten Verbindungsmitteln (46) aufweisen, wobei benachbarte Kettenglieder (3) jeweils über einen ersten (41) und einen zweiten Verbindungsbereich (42) miteinander verbunden sind.

13. Kreiskette nach Anspruch 12, **dadurch gekennzeichnet, dass** die Verbindungsmittel (45, 46) jeweils in oder an einem Vorsprung (43, 44) angeordnet sind, der sich umfänglich oder tangential zur Drehachse (d) von dem jeweiligen Verbindungsbereich (41, 42) weg erstreckt, wobei die Vorsprünge (45, 46) zweier Gelenkpartner (51) zahnartig ineinander greifend und seitlich vorzugsweise mit Spiel aneinander anliegen angeordnet sind.

14. Kreiskette nach Anspruch 12 oder 13, **dadurch gekennzeichnet, dass** die ersten Verbindungsmittel (46) zumindest eine zur Drehachse (d) radiale erste Scharnieröffnung (53) mit einem sich zumindest im Wesentlichen axial zur Drehachse (d) erstreckenden Langlochprofil sowie die zweiten Verbindungsmittel (54) zumindest eine zur Drehachse (d) zumindest im Wesentlichen radiale zweite Scharnieröffnung (54) mit kreisrundem Öffnungsprofil aufweisen, wobei benachbarte Kettenglieder (3) in einer Verbindungsposition so zusammengebracht angeordnet sind, dass die zumindest eine erste Scharnieröffnung (53) des einen Kettengliedes (3) bezüglich der ersten Schwenkachse (s1) axial fluchtend zu der zumindest einen zweiten Scharnieröffnung (54) des anderen Kettengliedes (3) angeordnet und durch einen durch die Scharnieröffnungen (53, 54) geführt angeordneten Scharnierbolzen (58) zueinander schwenkbeweglich gehalten sind.

15. Kreiskette nach Anspruch 12 oder 13, **dadurch gekennzeichnet, dass** die ersten Verbindungsmittel (45) zumindest eine zur Drehachse (d) radiale erste Scharnieröffnung (53) mit einem sich zumindest im Wesentlichen axial zur Drehachse (d) erstreckenden Langlochprofil, das als ein in axialer Richtung geöffnetes C-Profil ausgebildet ist, sowie die zweiten Verbindungsmittel (46) zumindest einen zur Drehachse (d) zumindest im Wesentlichen radial angeordneter Bolzen (55) aufweisen.

## Claims

1. A chain link with a sector-shaped body (31) for a circular chain (1) for receiving and guiding energy lines between two connection points which are moveable relative to each other in a circular motion about an axis of rotation (d), wherein the circular chain (1) has a circular arc-shaped body (2) having a circle center point axis (k), which body is composed of a plurality of sector-shaped chain links (3) adjoining each other in the peripheral direction (u), wherein in their adjoining connecting regions (41, 42) the chain links (3) are connected together pivotably about a respective first pivot axis (s1) which is radial with respect to the circle center point axis (k), **characterised in that** the chain link is adapted to form a pivotal connection in the form of a hinge joint connection (5) with a respective joint partner (51) and has at least one connecting region which is in the form of a first connecting region and which is so adapted that in addition to the pivotal movement about the first pivot axis (s1) the hinge joint connection (5) permits at least one further relative movement of the joint partners (51).

2. A chain link as set forth in claim 1 **characterised in that** it is designed for a first additional relative movement of the joint partners (51) in the form of a pivotal movement of the joint partners (51) about a second pivot axis (s2) in a direction (u) which is peripheral with respect to the circle center point axis (k) and/or for a second additional relative movement of the joint partners (51) in the form of a translation of the joint partners (51) perpendicularly or approximately perpendicularly to the longitudinal direction (l) and the transverse direction (q) of the joint partners (51).

3. A chain link as set forth in claim 1 or claim 2 **characterised in that** the first connecting region (41) has a sliding guide means (52) for guiding the associated joint partner (51).

4. A chain link as set forth in claim 3 **characterised in that** the first connecting region (41) of the chain link (3) as a first connecting means (45) has a first hinge opening (53) which is axial with respect to the first pivot axis (s1), with a slot profile extending at least substantially on the circle center point axis (k) as the sliding guide means (52).

5. A chain link as set forth in claim 4 **characterised in that** it has a plate-like body (31) having a thickness which is radial with respect to the first pivot axis (s1), wherein the first hinge opening (53) is arranged centrally relative to the radial thickness.

6. A chain link as set forth in one of claims 1 through 5 **characterised in that** it has a second connecting region (42) peripherally spaced from the first connecting region (41) with respect to the circle center point axis (k) for providing the hinge joint connection (5) with a further joint partner (51) and more specifically at the first connecting region (41) thereof, wherein the second connecting region (42) as a second connecting means (46) has at least one second hinge opening (54) which is axial with respect to the first pivot axis (s1), with an at least substantially circular opening profile for receiving a hinge pin (58) passed through the hinge openings (53, 54) or the second connecting region (42) as a second connecting means (46) has at least one substantially round pin (55) for engagement into the first hinge opening (53) of the associated joint partner (51).

7. A chain link as set forth in claim 6 **characterised in that** the slot profile of the first hinge opening (53) is of a C-shaped profile which opens radially with respect to the first pivot axis (s1) for receiving axially with respect to the circle center point axis (k) the at least substantially round pin (55) of the associated joint partner (51).

8. A chain link as set forth in claim 7 **characterised in that** the sector-shaped body (31) of the chain link (3) has a second side (23) which is arranged perpendicularly relative to the circle center point axis (k) and having means projecting axially therefrom, in particular loop-shaped or arcuate holding means (8), for receiving and guiding the energy lines, and that the C-shaped profile is adapted to be opened in the axial direction of the projecting means.

9. A chain link as set forth in one of claims 6 through 8 **characterised in that** extending peripherally away from the respective circle center point axis (k) arranged in the first connecting region (41) is at least one first projection (43) with the first connecting means (45) and arranged in the second connecting region (42) is at least one second projection (44) with the second connecting means (46), wherein in the first connecting region (41) at least two projections in the form of the first projections (43) and in the second connecting region (42) at least three projections in the form of the second projections (44) are provided and wherein the projections (43, 44) are arranged in mutually radially adjoining relationship and in an alternate sequence with respect to the circle center point axis (k).

10. A chain link as set forth in claim 10 **characterised in that** provided in the first connecting region (41) are at least two projections in the form of the first projections (43) and provided in the second connecting region (42) are at least three projections in the form of the second projections (44) wherein the projections (43, 44) are arranged in mutually radially adjoining relationship and in an alternate sequence with respect to the circle center point axis (k).

11. A circular chain as set forth in claim 10 **characterised in that** the joint partners (51) are arranged moveably relative to each other in a first additional relative movement in the form of a pivotal movement of the joint partners (51) about a second pivot axis (s2) in a peripheral direction with respect to the axis of rotation (d) and/or in a second additional relative movement in the form of an at least substantially axial translation perpendicularly or approximately perpendicularly to the longitudinal direction (l) and the transverse direction (q) of the joint partners (51).

12. A circular chain as set forth in claim 10 or claim 11 **characterised in that** the chain links (3) for providing the hinge connections (5) with the adjacent chain links (6) respectively have a first connecting region (41) having first connecting means (45) and a second connecting region (42) peripherally spaced from the first connecting region (41) with respect to the axis of rotation (d) and having second connecting means (46), wherein adjacent chain links (3) are respectively connected together by way of a first (41) and a second connecting region (42).

13. A circular chain as set forth in claim 12 **characterised in that** the connecting means (45, 46) are respectively arranged in or at a projection (43, 44) which extends peripherally or tangentially relative to the axis of rotation (d) away from the respective connecting region (41, 42), wherein the projections (45, 46) of two joint partners (51) are arranged to engage tooth-like into each other and are arranged to bear against each other laterally preferably with play.

14. A circular chain as set forth in claim 12 or claim 13 **characterised in that** the first connecting means (46) have at least one first hinge opening (53) which is radial with respect to the axis of rotation (d) and having a slot profile extending at least substantially axially relative to the axis of rotation (d) and the second connecting means (54) have at least one second hinge opening (54) which is at least substantially radial with respect to the axis of rotation (d) and of circular opening profile, wherein adjacent chain links (3) in a connecting position are arranged to be brought together in such a way that the at least one first hinge opening (53) of the one chain link (3) is arranged in axially aligned relationship with respect to the first pivot axis (s1) in relation to the at least one second hinge opening (54) of the other chain link (3) and are held pivotably relative to each other by a hinge pin (58) arranged to be passed through the hinge openings (53, 54).

15. A circular chain as set forth in claim 12 or claim 13 **characterised in that** the first connecting means (45) has at least one first hinge opening (53) which is radial with respect to the axis of rotation (d) and has a slot profile extending at least substantially axially with respect to the axis of rotation (d) and in the form of a C-shaped profile which is opened in the axial direction, and the second connecting means (46) have at least one pin (55) arranged at least substantially radially with respect to the axis of rotation (d).

## Revendications

1. Maillon de chaîne comportant un corps circulaire (31) en forme de secteur pour une chaîne circulaire (1) destinée à recevoir et à guider des lignes d'énergie entre deux points de raccordement mobiles l'un par rapport à l'autre dans un mouvement circulaire autour d'un axe de rotation (d), la chaîne circulaire (1) comportant un corps en arc de cercle (2) avec un axe de centre du cercle (k), lequel corps étant composé de plusieurs maillons de chaîne (3) adjacents dans la direction circonférentielle (u), lesdits maillons de chaîne (3) étant reliés les uns aux autres dans leurs zones de liaison (41, 42) adjacentes de manière pivotante l'un à l'autre autour d'un premier axe de pivotement (s1) radial par rapport à l'axe de centre du cercle (k), **caractérisé en ce que** le maillon de chaîne est conçu pour former une liaison pivotante avec un partenaire d'articulation (51) respectif sous la forme d'une articulation à charnière (5) et présente au moins une zone de liaison sous la forme d'une première zone de liaison (41) qui est conçue de telle manière que l'articulation à charnière (5) permet au moins un autre mouvement relatif des partenaires d'articulation (51) outre le pivotement autour du premier axe de pivotement (s1).

2. Maillot de chaîne selon la revendication 1, **caractérisé en ce qu'**il est conçu pour un premier mouvement relatif supplémentaire des partenaires d'articulation (51) sous la forme d'un pivotement des partenaires d'articulation (51) autour d'un second axe de pivotement (s2) dans la direction circonférentielle (u) par rapport à l'axe central du cercle (k) et/ou pour un second mouvement relatif supplémentaire des partenaires d'articulation (51) sous la forme d'une translation perpendiculaire ou approximativement perpendiculaire à la direction longitudinale (1) et transversale (q) des partenaires d'articulation (51).

3. Maillot de chaîne selon la revendication 1 ou 2, **caractérisé en ce que** la première zone de liaison (41) présente un guide à coulisse (52) pour guider le partenaire d'articulation (51) associé.

4. Maillot de chaîne selon la revendication 3, **caractérisé en ce que** la première zone de liaison (41) du maillot de chaîne (3) comporte comme un premier moyen de liaison (45) une première ouverture de charnière (53) qui est axiale par rapport au premier axe de pivotement (s1) et qui comporte comme guide à coulisse (52) un profil de trou oblong s'étendant sensiblement dans l'axe de centre du cercle (k).

5. Maillot de chaîne selon la revendication 4, **caractérisé en ce qu'**il présente un corps (31) en forme de plaque ayant une épaisseur radiale par rapport au premier axe de pivotement (s1), la première ouverture de charnière (53) étant disposée au centre par rapport à l'épaisseur radiale.

6. Maillot de chaîne selon l'une des revendications 1 à 5, **caractérisé en ce qu'**il présente une deuxième zone de liaison (42), qui est espacée circonférentiellement de la première zone de liaison (41) à l'axe de centre du cercle (k), pour former la liaison sous la forme d'une articulation à charnière (5) avec un autre partenaire d'articulation (51), à savoir à la première zone de liaison (41) de celui-ci, la deuxième zone de liaison (42) présentant comme deuxième moyen de liaison (46) au moins une deuxième ouverture de charnière (54) qui est axiale par rapport au premier axe de pivotement (s1) et présente un profil d'ouverture essentiellement circulaire pour recevoir une broche de charnière (58) guidé par les ouvertures de charnière (53, 54), ou la deuxième zone de liaison (42) présentant comme deuxième moyen de liaison (46) au moins un boulon essentiellement circulaire (55) pour être engagée dans la première ouverture de charnière (53) du partenaire d'articulation associé (51).

7. Maillot de chaîne selon la revendication 6, **caractérisé en ce que** le profil de trou oblong de la première ouverture de charnière (53) présente un profil en C qui s'ouvre radialement par rapport au premier axe de pivotement (s1) pour recevoir axialement le boulon au moins sensiblement circulaire (55) du partenaire d'articulation (51) associé par rapport à l'axe de centre du cercle (k).

8. Maillot de chaîne selon la revendication 7, **caractérisé en ce que** le corps (31) en forme de secteur circulaire du maillon de chaîne (3) présente un deuxième côté (23) disposé perpendiculairement à l'axe de centre du cercle (k) et présente des moyens, en particulier des moyens de maintien (8) en forme d'étrier ou en forme d'arc, qui s'étendent axialement à distance du deuxième côté (23), pour recevoir et guider les lignes d'énergie et **en ce que** le profil en C est conçu pour être ouvert dans la direction axiale desdits moyens s'étendant.

9. Maillot de chaîne selon l'une des revendications 6 à 8, **caractérisé en ce qu'**au moins une première saillie (43) avec le premier moyen de liaison est disposée dans la première zone de liaison (41) et au moins une seconde saillie (44) avec le second moyen de liaison (46) est disposée dans la seconde zone de liaison (42), s'étendant respectivement circonférentiellement à l'opposé de l'axe de centre du cercle (k), au moins deux saillies formées comme premières saillies (43) étant prévues dans la première zone de liaison (41) et au moins trois saillies formées comme secondes saillies (44) étant prévues dans la seconde zone de liaison (42), les saillies (43, 44) étant disposées radialement adjacentes l'une par rapport à l'autre et dans un ordre alternatif par rapport à l'axe de centre du cercle (k).

10. Chaîne circulaire pour recevoir et guider des lignes d'énergie (E) entre deux points de raccordement (2) mobiles l'un par rapport à l'autre dans un mouvement circulaire autour d'un axe de rotation (d), la chaîne circulaire (1) présentant un espace de guidage (6) pour les lignes d'énergie et un corps (2) en arc de cercle qui est composé de plusieurs maillons de chaîne (3) en forme de secteur circulaire adjacents dans la direction circonférentielle selon l'une des revendications 1 à 11 et les maillons (3) dans leur zones de liaison adjacentes (41, 43) étant reliées de manière pivotante l'une à l'autre par l'intermédiaire d'un premier axe de pivotement radial (s1) dans une liaison sous la forme d'une articulation à charnière (5) et dans lequel la liaison sous la forme d'une articulation à charnière (5) en plus de pivoter autour du premier axe de pivotement (s1), permet au moins un autre mouvement relatif des partenaires d'articulation (51) les uns par rapport aux autres.

11. Chaîne circulaire selon la revendication 10, **caractérisée en ce que** les partenaires d'articulation (51) sont disposés de manière mobile l'un par rapport à l'autre dans un premier mouvement relatif supplémentaire sous la forme d'un pivotement des partenaires d'articulation (51) autour d'un deuxième axe de pivotement (s2) dans une direction circonférentielle par rapport à l'axe de rotation (d) et/ou dans un deuxième mouvement relatif supplémentaire sous la forme d'une translation au moins sensiblement axiale perpendiculairement ou approximativement perpendiculairement à la direction longitudinale (1) et transversale (q) des partenaires d'articulation (51).

12. Chaîne circulaire selon la revendication 10 ou 11, **caractérisée en ce que** les maillons de chaîne (3) pour former les liaisons sous la forme d'une articulation à charnière (5) avec les maillons de chaîne adjacents (3) présentent chacun une première zone de liaison (41) avec des premiers moyens de liaison (45) et une seconde zone de liaison (42) avec des seconds moyens de liaison (46) espacés circonférentiellement de la première zone de liaison (41) par rapport à l'axe de rotation (d), des maillons de chaîne voisins (3) étant reliés entre eux par une première (41) et une seconde zone de liaison (42).

13. Chaîne circulaire selon la revendication 12, **caractérisée en ce que** les moyens de liaison (45, 46) sont chacun disposés dans ou sur une saillie (43, 44) qui s'étend circonférentiellement ou tangentiellement à l'axe de rotation (d) à l'écart de la zone de liaison (41, 42) respective, les saillies (45, 46) de deux partenaires d'articulation (51) étant agencées pour s'engager l'une dans l'autre d'une manière analogue à une dent et pour venir en butée l'une contre l'autre latéralement de préférence avec jeu.

14. Chaîne circulaire selon la revendication 12 ou 13, **caractérisée en ce que** les premiers moyens de liaison (46) présentent au moins une première ouverture de charnière (53) qui est radiale par rapport à l'axe de rotation (d) et présente un profil de trou oblong qui s'étend essentiellement axialement par rapport à l'axe de rotation (d), et **en ce que** les seconds moyens de liaison (54) présentent au moins une seconde ouverture de charnière (54) qui est au moins essentiellement radiale par rapport à l'axe de rotation (d) et présente un profil circulaire d'ouverture, des maillons de chaîne adjacents (3) étant disposés et réunis dans une position de liaison de telle sorte que l'au moins une ouverture de charnière (53) de l'un maillon de chaîne (3) est disposée axialement alignée par rapport au premier axe de pivotement (s1) par rapport à ladite au moins une deuxième ouverture de charnière (54) de l'autre maillon de chaîne (3) et est maintenue mobile en pivotement l'un par rapport à l'autre par une broche de charnière (58) disposée de manière guidée dans les ouvertures de charnières (53 54).

15. Chaîne circulaire selon la revendication 12 ou 13, **caractérisée en ce que** les premiers moyens de liaison (45) présentent au moins une première ouverture de charnière (53) qui est radiale par rapport à l'axe de rotation (d) et présente un profil de trou oblong qui s'étend au moins sensiblement axialement par rapport à l'axe de rotation (d) et qui est réalisé sous forme de profilé C ouvert dans la direction axiale et les seconds moyens de liaison (46) présentent au moins un boulon (55) qui est disposée au moins sensiblement radialement par rapport à l'axe de rotation (d).
